# EUROPÄISCHE PATENTANMELDUNG

(11) **EP 1 920 979 A2**
(43) Veröffentlichungstag der Anmeldung: **14.05.2008**
(21) Anmeldenummer: 07021616.3
(22) Anmeldetag: 07.11.2007
(51) Int. Cl.: B60R 25/00

(54) **Wohnmobil oder Wohnwagen mit irreversibler Identifikations-Einrichtung**

(30) Priorität: 07.11.2006 DE 202006016984 U
(71) Anmelder: Publimind GmbH, 88239 Wangen im Allgäu (DE)
(72) Erfinder: Rasch, Guido, 88239 Wangen im Allgäu (DE)
(74) Vertreter: Riebling, Peter

(57) **Zusammenfassung**

Die Erfindung betrifft ein Wohnmobil oder Wohnwagen mit Identifikations-Einrichtung, wobei mindestens ein RuBee-Transponder innerhalb des Wand-, Dach- Decken- oder Bodenaufbaus des Wohnwagens oder Reisemobils jenseits einer funkwellenabsperrenden metallischen Außenhaut angeordnet ist und dass die von dem mindestens einen Transponder ausgesendeten Funkwellen die metallische Außenhaut des Fahrzeuges durchdringen.

Der Transponder ist nur durch eine irreversible Zerstörung des Fahrzeuges oder des separaten Bauteils am Ort seines Aufbaus wieder entfernbar.

## Beschreibung

Gegenstand der Neuerung ist ein Wohnmobil oder Wohnwagen mit einer ldentifikations-Einrichtung nach dem Oberbegriff des Schutzanspruches 1.

Mit dem Gegenstand der DE 10 2004 061 858 A1 ist ein sogenanntes Fahrzeug-Managementsystem bekannt geworden, bei dem sogenannte IC-Plaketten an einem Fahrzeug befestigt werden. In den IC-Plaketten sind Speicherbereiche vorgesehen, in denen beispielsweise die Fahrgestellnummer, der Typ und andere Informationen gespeichert sind, die dazu dienen, dem Fahrzeug eine bestimmte Lebensdauer-Historie zuzuordnen.

Ein ähnliches Fahrzeug-Managementsystem ist auch aus der DE 10 2004 046 399 A1 zu entnehmen, bei der ebenfalls ein sogenanntes IC-Etikett an der Außenseite eines Motorrades befestigt wird, um dort in bestimmten Speicherbereichen die Historie des Fahrzeuges abzuspeichern und gegebenenfalls wieder auszulesen.:

Mit der DE 100 43 752 A1 ist es im Übrigen bekannt, transportable Waren mit einem RFID-Transponder zu versehen, um den Weg der Ware vom Absender zu Empfänger zu verfolgen. Nachteil der Verwendung eines IC-Etikettes oder eines RFID-Transponders ist jedoch seine ungeschützte Anbringung an Flächen des Fahrzeuges. Dies führt dazu, dass das IC-Etikett leicht entfernt werden kann und dann das Fahrzeug nicht mehr identifizierbar ist. Als Diebstahlschutz sind die bisher bekannten IC-Etiketten oder RFID-Transponder ebenfalls nicht geeignet, denn an Fahrzeugen mit einer metallischen Außenhaut können solche Transponder nicht im Innenraum befestigt werden, weil sie keinen Sendestrahl von dem Innenraum des Fahrzeuges durch die metallische Außenhaut nach außen senden können.

Darüber hinaus wird mit der Druckschrift DE 100 42 805 A1 eine elektronisch Diebstahlsicherung für mobile Objekte und ein damit verbundenes Verfahren zur Datenübermittlung offenbart, wobei ein mit relevanten Daten gespeicherter Transponder lediglich zerstörbar von dem mobilen Objekt entfernbar ist und Daten mittels einer aktiven und/oder passiven Sende-/Empfangseinrichtung drahtlos an ein Lesegerät überträgt. Der lediglich durch Zerstörung entfernbare Transponder wird vorzugsweise während der Fertigung des mobilen Objektes in dessen Außenhaut integriert, wobei herkömmliche Transponder, wie zum Beispiel ein RFID nur dann integrierbar ist, wenn die Außenhaut keinen Metallmaterial aufweist, welche die Sende- und Empfangsfähigkeit eines derartigen Transponders nahezu unmöglich ausbildet.
Des Weiteren ist ein nachträglicher Einbau eines Transponders, welcher lediglich durch Zerstörung von dem mobilen Objekt entfernbar ist und somit zur Diebstahlsicherung dient. diesem Stand der Technik nicht zu entnehmen.

Ein an einem mobilen Objekt nachträglich angeordneter Transponder zur Diebstahlsicherung sollte zusätzlich zur Anordnung unterhalb eines Metallmaterials auch gleiche Schutzeigenschaften aufweisen, wie die bereits während der Fertigung des Objektes integrierten Transponder.

Der Neuerung liegt deshalb die Aufgabe zugrunde, einen Wohnwagen ein Reisemobil der eingangs genannten Art so weiterzubilden, dass eine irreversible Anbringung von Sicherheitsetiketten unterhalb eines Metallmaterials möglich ist.

Zur Lösung der gestellten Aufgabe ist die Erfindung durch die technische Lehre des Anspruches 1 gekennzeichnet.

Wesentliches Merkmal der Erfindung ist, dass erfindungsgemäß ein aktiver RFID-Transponder der 2. Generation (später auch als RuBee-Transponder bezeichnet) innerhalb des Wand-, Dach- oder Bodenaufbaus eines Wohnwagens oder Reisemobils angeordnet ist, und zwar jenseits (innerhalb) einer funkwellenabsperrenden metallischen Außenhaut und dass die vom aktiven Transponder ausgesendeten Funkwellen die metallische Außenhaut des Fahrzeuges durchdringen.

Als weiteres Merkmal der Erfindung ist vorgesehen, dass ein derartiger RuBee-Transponder zur Diebstahlsicherung in oder an einem Caravan oder Reisemobil nachträglich anordnungsbar ist und Schutzeigenschaften aufweist, die vergleichbar mit den Schutzeigenschaften eines bereits während der Fertigung des Caravans angeordneten Rubee's sind.

Der gegebenen technischen Lehre ergibt sich somit ein vollkommen neuer Ansatz zum Diebstahlschutz und zur Identifizierung von Wohnwagen und Reisemobilen mit einer metallischen Außenhaut, den neuerungsgemäß ist es vorgesehen, dass ein aktiv strahlender Transponder, der auch als RuBee-Transponder bekannt ist, in einem Wohnwagen oder Reisemobil unzerstörbar eingesetzt wird.

Darüber hinaus ist eine nachträgliche Anordnung eines derartigen RuBee-Transponder der neuen Generation ohne größeren Montageaufwand möglich.

Ein solcher RuBee ist ein aktiver Transponder, der ständig einen das Fahrzeug identifizierenden und mit mehreren Fahrzeugmerkmalen versehenen Sendestrahl nach außen sendet und hierbei - nach dem derzeitigen Erkenntnisstand - eine ununterbrochene Sendezeit von mehr als 10 Jahren aufweist. Dies ist ein wesentlicher Vorteil gegenüber bekannten RFID-Transpondern, die lediglich auf einen Sendestrahl antworten. Das Antwortsignal eines solchen Transponders würde zum Beispiel die AL-Außenhaut des Fahrzeuges nicht durchdringen.

Hier setzt die Erfindung ein, in dem der neuartige RuBee-Chip verwendet wird, der sehr klein ist und beispielsweise nur die Dicke einer Kreditkarte hat und in einem Frequenzbereich von bevorzugt 450 kHz mit einer Reichweite von über 15 Metern sendet.

Dies ist ein wesentlicher Fortschritt gegenüber dem Stand der Technik, denn bei dem in Sandwich-Bauweise gefertigten Aufbau von Wohnmobilen und Wohnanhängern ist nun erfindungsgemäß der RuBee-Transponder in einem mit Isoliermaterial ausgefüllten Holzgerippe integriert und wird bei der Fertigung des Fahrzeuges f st in den Innenaufbau einbezogen. Damit handelt es sich um ein Sicherheitsmerkmal, das in das zu schützende Fahrzeug so integriert ist, dass ein nachträgliches Entfernen nicht mehr möglich ist, ohne wesentliche Teile des Fahrzeuges zu beschädigen und damit unbrauchbar zu machen.

In einer bevorzugten Ausgestaltung wird der erfindungsgemäße Transponder bei der Produktion des Fahrzeuges in der Seitenwand, der Bodenplatte oder dem Dach mit der Herstellung des Sandwich-Aufbaus verpresst, was ohne nennenswerten Aufwand möglich ist.

Der Transponder ist mit einer eindeutigen, nicht manipulierbaren Ident-Nummer versehen. Die IDs werden in einer zentralen Datenbank verwaltet, so dass jederzeit eine direkte Zuordnung von Fahrzeug, Fahrzeuggeschichte und Eigentümer erfolgen kann. Die Zuordnung der Fahrzeug-ID, von Ausliefern dem Händler und dem Eigentümer kann durch eine autorisierte Stelle, z. B. dem Datenbankbetreiber erfolgen.

Selbstverständlich können mehrere Transponder in einem Fahrzeug eingebaut werden, so dass die Neuerung nicht auf den Einbau eines einzigen Transponders gerichtet ist. So kann es beispielsweise auch vorgesehen sein, dass wenn der eine Transponder durch Ausbau beschädigt wird, dass erst dann der andere Transponder aktiviert wird und dann fortlaufend ein Alarmsignal aussendet.

Ebenso ist es in einer anderen Ausgestaltung möglich, dass die an verschiedenen Stellen im Wand- oder Dachaufbau eingebauten Transponder unterschiedliche IDs aussenden, um zu gewährleisten, dass eine einwandfreie Identifizierung des Fahrzeuges auch dann möglich ist, wenn eine komplette Seitenwand, ein Boden oder ein Dach ausgebaut und ersetzt wird.

Für eine nachträgliche Anordnung eines derartigen RuBee's an oder in einem Fahrzeug ist es möglich, diesen in einem separaten Bauteil zu integrieren, wobei das separate Bauteil zum Beispiel aus einem Metallmaterial gefertigt ist und worin der Transponder in einer sandwichartigen Anordnung integriert ist, ähnlich der zuvor sandwichartigen Anordnung innerhalb einer Wand, des Bodens oder der Decke des Fahrzeuges.

Selbstverständlich sind auch andere Materialien zur Herstellung ein separaten Bauteils möglich, wie zum Beispiel Kunststoff, Holz oder dergleichen.

Somit ist der in dem separaten Bauteil angeordnete Transponder gegen jegliche Art von Beschädigung oder Verschmutzung geschützt und aufgrund einer unlösbaren Verbindung des separaten Bauteils mit dem Fahrzeug lediglich durch Zerstörung des Bauteils zu entfernen.

Selbst eine nachträgliche Anordnung eines derartigen RFID-Transponders in zum Beispiel den Möbelaufbauten des Fahrzeuges ist möglich.

Dadurch ist gewährleistet, dass ein RFID-Transponder der neuen Generation auch nachträglich an einem Fahrzeug zur Diebstahlsicherung befestigt werden kann und gleiche Schutzeigenschaften aufweist, wie ein bereits während der Fertigung des Fahrzeuges in die Fahrzeugwand, Boden oder Decke integrierten RFID-Transponder.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere wesentliche Merkmale und Vorteile der Erfindung hervor.

Es zeigen:
- Figur 1:: perspektivisch ein Beispiel für ein Sandwich-Aufbau im Wandbereich eines Fahrzeuges;
- Figur 2:: einen Wohnanhänger mit Einbaubeispielen für den Transponder;
- Figur 3:: ein Reisemobil mit Einbaubeispielen für einen Transponder;
- Figur 4:: die Datenverarbeitung der Daten eines Transponders in einer Datenbank;
- Figur 5:: Bildschirmansicht der Daten, die in der Datenbank erzeugt werden.
- Figur 6:: ein Ausführungsbeispiel eines separaten Bauteil mit einem in sandwichbauweise integrierten RFID-Transponder.

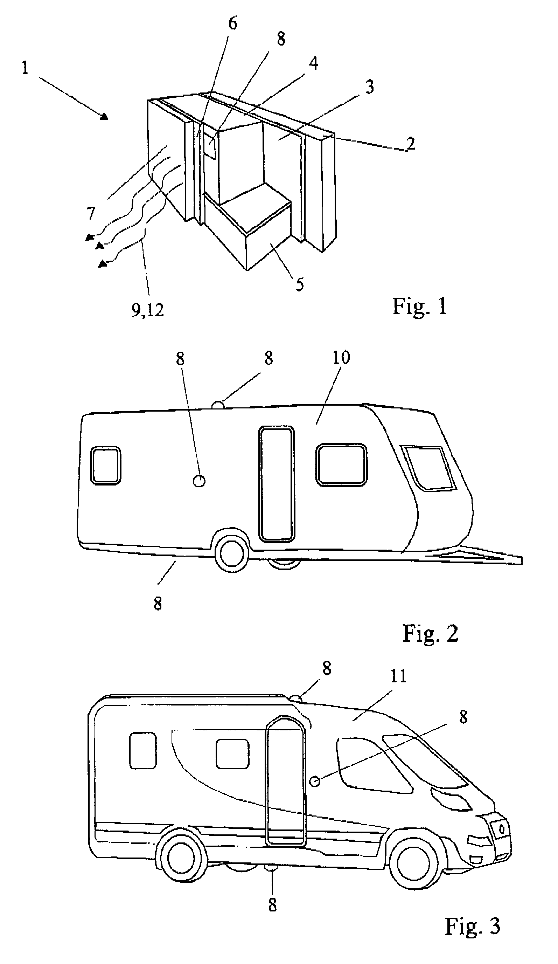

In Figur 1 ist allgemein ein Wand- oder Dachaufbau 1 eines Wohnwagens 10 oder Reisemobils in Sandwich-Bauweise darstellt. In herkömmlicher Weise besteht der innere Aufbau im Wesentlichen aus einer Sperrholzschicht 2, die nach Außen hin von einer Klebeschicht 3 abgedeckt ist, an der eine Dämmschicht 4, z. B. aus Styropor, angeordnet ist.

Die Dämmschicht 4 ist im Bereich eines umlaufenden Rahmens 5 angeordnet, der aus einem Metallmaterial oder einem Holzmaterial sein kann.

An der Außenseite trägt die Dämmschicht 4 ein oder mehrere Schichten aus einer Dampfsperrfolie und weitere Klebeschichten, wobei die Dämmschicht 4 an der Innenseite einer metallischen Außenhaut, insbesondere einer AL-Außenhaut 7 angeklebt ist.

Neuerungsgemäß sind nun ein oder mehrere RuBee-Transponder 8 in diesen Innenaufbau integriert und beispielsweise in die Dämmschicht 4 eingelassen, so dass sie nur schwer zu finden und zu orten sind. Der einfacheren Beschreibung wegen wird in der folgenden Beschreibung jedoch nur von dem Einbau eines einzigen RuBee-Transponders ausgegangen.

Nachdem es sich um einen aktiven Transponder handelt, sendet dieser in den Pfeilrichtungen 9 ständig einen Sendestrahl 12 durch die AL-Außenhaut 7 nach außen und übermittelt mit dem Sendestrahl 12 die Fahrzeug-ID.

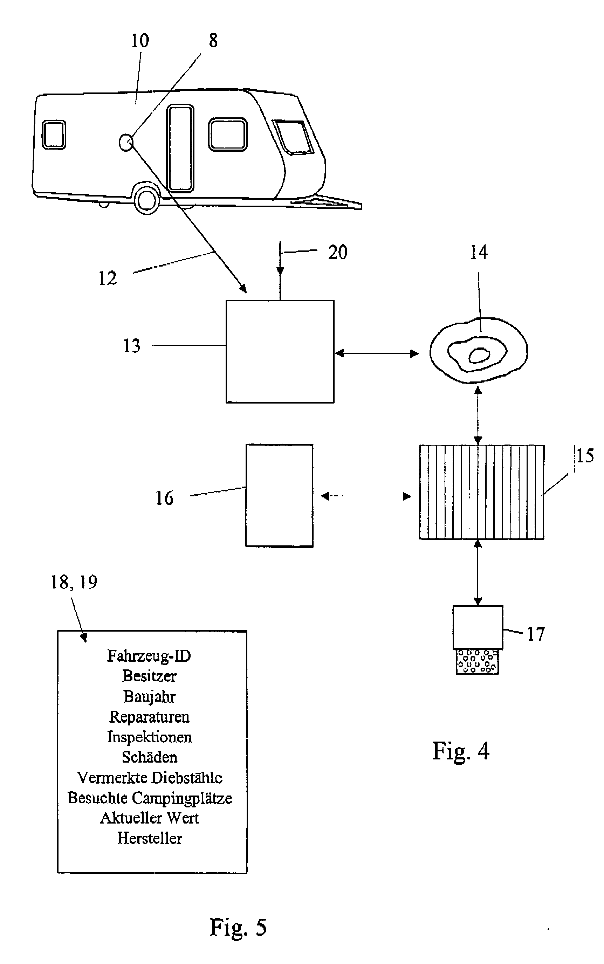

Die Figur 4 zeigt die weitere Datenvereinbarung der von dem Transponder 8 ausgesendeten Daten. Über ein Empfangsgerät 13 mit einer Antenne 20 wird beispielsweise die ID-Nummer und andere fahrzeugrelevanten Daten ausgelesen und auf der Anzeige des Empfangsgerätes 13 dargestellt.

Über eine drahtgebundene oder drahtlose Verbindung werden diese Daten einem Server 15 durchgeführt.

Im gezeigten Ausführungsbeispiel ist die Übertragungsstrecke 14 zwischen dem Empfangsgerät 13 und dem Server 15 als Internet-Verbindung dargestellt.

Genauso gut kann diese Verbindung jedoch drahtgebunden über das Festnetz oder auch Ober ein Mobilfunknetz erfolgen.

Im Server 15 werden die Daten ausgewertet und mit einer Datenbank 16 abgeglichen. Über ein Terminal 17 können die Daten ausgelesen und entsprechend beeinflusst werden.

Die Figur 5 zeigt als Ausführungsbeispiel einen Datensatz 19 auf der Displayanzeige 18 der Datenbank 16, wo erkennbar ist, dass folgende Daten in der Datenbank 16 verwaltet werden:
➢ Fahrzeug-ID
➢ Besitzer
➢ Baujahr
➢ Reparaturen
➢ Inspektionen
➢ Schäden
➢ Vermerkte Diebstähle
➢ Besuchte Campingplätze
➢ Aktueller Wert
➢ Hersteller

Neben diesen Daten können noch eine Vielzahl weiterer Daten erfasst und verarbeitet werden. Sinn der Maßnahmen ist, dass man einer eindeutigen, nicht veränderbaren Fahrzeug-ID nun eine Vielzahl von weiteren Daten der Datenbank zuordnen kann, um so dem Fahrzeug 10, 11 eine unverwechselbare Historie, eine Identität und eine Vielzahl nützlicher Informationen zuordnen zu können.

Diese Informationen sind nicht nur für den Besitzer wichtig, sondern auch für den Händler, die Reparaturwerkstatt, den Campingplatz den das Fahrzeug anfährt und für alle anderen Stellen, an denen es darauf ankommt, die Fahrzeugdaten auszuwerten und zu empfangen.

Beispielsweise wird bei der Verwendung eines aktivsendenden Transponders 8 auch ein Campingplatzbesuch sehr stark vereinfacht. Der Besitzer des Fahrzeuges 10, 11 muss deshalb nur in den Eingangsbereich eines Campingplatzes hineinfahre und über ein dort angeordnetes Empfangsgerät 13 wird die Fahrzeug-ID ausgelese und der Campingplatzbesitzer verknüpft diese Fahrzeugdaten von seinem Empfangsgerät 13 aus mit den Daten der Datenbank 16 über den Server 15.

Er weiß dann sofort bei Einfahren des Fahrzeuges in den Campingplatz, um welchen Besitzer es sich handelt, welches Fahrzeug vorhanden ist, welche Abmessungen, Größen und Vorlieben der Besitzer hat, um ihn einen bestimmten Aufstellplatz auf dem Campingplatz zuzuweisen.

Über eine Schnittstelle zwischen der Datenbank auf dem Campingplatz und der Datenbank 16, welche die Fahrzeug-ID verwaltet, können noch weitere Daten ermittelt werden, z. B. Buchungszeitraum, Ausstattungswünsche auf dem Campingplatz und sonstige Vorlieben des Besitzers.

Es ergibt sich somit ein sehr flexibles, den Bedürfnissen des Besitzers des Fahrzeuges angepasstes Verwaltungssystem, welches auf der Verwendung eines aktivsendend Transponders basiert, der unzerstörbar in einem Wanddach oder Deckaufbau des Fahrzeuges integriert ist.

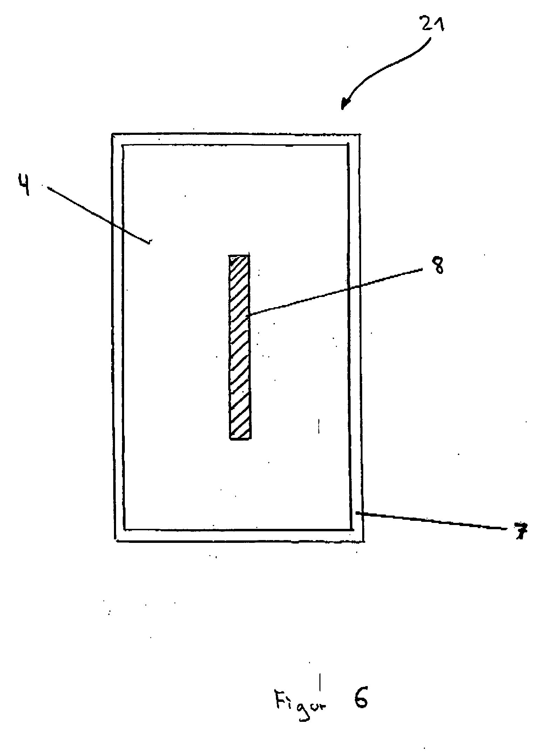

In Figur 6 wird eine beispielhafte, schematische Schnittdarstellung eines RFID-Transponders 8 dargestellt, welcher in einer Art sandwichbauweise in einem separaten Bauteil 21 integriert ist.

Das separate Bauteil 21 ist vorzugsweise aus einem Metallmaterial gefertigt und kann unlösbar mittels zum Beispiel Schweißen oder Nieten Außen am Fahrzeugrahmen oder im Fahrzeuginnenraum befestigt werden.

Aufgrund der Sendegeschwindigkeit des Rubee's ist eine störungsfreie Sende- und Empfangsbereitschaft des RuBee's auch durch Wandungen mit einer metallischen Außenhaut gewähleistet.

### Zeichnungslegende

- 1: Wand- oder Deckenaufbau
- 2: Sperrholzschicht
- 3: Klebeschicht
- 4: Dämmschicht
- 5: Rahmen
- 6: Klebeschicht
- 7: AL-Außenhaut
- 8: RuBee-Transponder
- 9: Pfeilrichtung
- 10: Wohnwagen
- 11: Reisemobil
- 12: Sendestrahl
- 13: Empfangsgerät
- 14: Übertragungsstrecke
- 15: Server
- 16: Datenbank
- 17: Terminal
- 18: Displayanzeige
- 19: Datensatz
- 20: Antenne
- 21: Bauteil (zur Anordnung eines Transponders)

## Patentansprüche

1. Wohnmobil oder Wohnwagen mit Identifikations-Einrichtung, wobei die sicherheitstechnische Einrichtung einen Transponder (8) aufweist, der ein Identifikationsmerkmal ausstrahlt, wobei der Transponder als aktiver, eine eigene Energieversorgung aufweisender RuBee-Transponder (8) ausgebildet ist und dass der mindestens eine RuBee-Transponder (8) an ein oder mehreren Stellen verborgen im Aufbau und/oder am Fahrgestell des Fahrzeuges während des Produktionsprozesse integriert ist und dass dessen Entfernung nur bei einer irreversiblen Beschädigung des Fahrzeuges an diesem Ort möglich ist, **dadurch gekennzeichnet, dass** die vom und zum aktiven RuBee-Transponder (8) ausgesendeten bzw. empfangenen Sendestrahlen (12) die metallische Außenhaut (7) des Wohnmobils oder Wohnwagens (10, 11) ununterbrochen durchdringen.

2. Wohnmobil oder Wohnwagen nach Anspruch 1, **dadurch gekennzeichnet, dass** der RuBee-Transponder (8) in einem separaten Bauteil (21) in sandwichbauweise integriert ist, wobei das Bauteil (21) unlösbar Außen und/oder im Innenraum des Wohnmobils oder Wohnwagens (10, 11 ) befestigbar ist, wodurch eine nachträgliche Anordnung eines derartigen RuBee-Transponders (8) an oder in einem Fahrzeug gewährleistet ist.

3. Wohnmobil oder Wohnwagen nach Anspruch 1 oder 2, **dadurch gekennzeichnet, dass** der Transponder (8) innerhalb des Wand-, Dach- Decken-oder Bodenaufbaus (1) des Wohnwagens oder Reisemobils (10, 11) jenseits einer funkwellenabsperrenden metallischen Außenhaut (7) angeordnet ist und dass die ausgesendeten Funkwellen die metallische Außenhaut (7) des Fahrzeuges durchdringen.

4. Wohnmobil oder Wohnwagen nach Anspruch 1 bis 3, **dadurch gekennzeichnet, dass** die sicherheitstechnische Einrichtung als Diebstahlschutz und zur Identifizierung von Wohnwagen und Reisemobilen (10, 11) ausgebildet ist, wobei der mindestens eine Transponder (8) ein aktiv strahlender RuBee-Transponder ist, der unzerstörbar eingesetzt ist.

5. Wohnmobil oder Wohnwagen nach einem der vorhergehenden Ansprüche bis 4, **dadurch gekennzeichnet, dass** der RuBee-Chip die Dicke einer Kreditkarte aufweist und vorzugsweise in einem Frequenzbereich von 450 kHz mit einer Reichweite von zum Beispiel 15 Metern sendet.

6. Wohnmobil oder Wohnwagen nach einem der vorhergehenden Ansprüche 1 bis 5, **dadurch gekennzeichnet, dass** der Wohnwagen oder das Wohnmobil (10, 11) eine Sandwich-Bauweise aufweist, wobei der mindestens eine Transponder (8) vorzugsweise in einer mit einer Dämmschicht (4) ausgestatteten Sperrholzschicht (2) integriert ist.

7. Wohnmobil oder Wohnwagen nach einem der vorhergehenden Ansprüche 1 bis 6, **dadurch gekennzeichnet, dass** der mindestens eine Transponder (8) eine unverwechselbare Ident-Nummer aufweist, welche zum Beispiel durch einen Datenbankbetreiber in einer zentralen Datenbank (16) verwaltet wird und eine direkte Zuordnung von Fahrzeug, Fahrzeughistorie und Eigentümer ausbildet.

8. Wohnmobil oder Wohnwagen nach einem der vorhergehenden Ansprüche 1 bis 7, **dadurch gekennzeichnet, dass** beim Einbau von mehreren Transpondern (8) an unterschiedlichen Stellen im Wand-, Dach-, Decken- und Bodenaufbau (1 des Wohnwagens oder Wohnmobils (10, 11 ) lediglich ein einzelner RFID-Transponder (8) Sendestrahlen (12) aussendet und die Aktivierung eines zweiten Transponders (8) erst geschieht, wenn der erste Transponder (8) keine Sendestrahlen (12) aussendet.

9. Wohnmobil oder Wohnwagen nach einem der vorhergehenden Ansprüche 1 bis 8, **dadurch gekennzeichnet, dass** die an unterschiedlichen Stellen angeordneten Transponder (8) unterschiedliche IDs aussenden, welche eine einwandfreie Identifizierung des Fahrzeuges gewährleisten, wenn eine Seitenwand, ein Boden und/oder ein Deckenteil ausgebaut oder ersetzt wird.

10. Wohnmobil oder Wohnwagen nach einem der vorhergehenden Ansprüche 1 bis 9, **dadurch gekennzeichnet, dass** die weitere Datenverarbeitung der von dem mindestens einem aktiven Transponder (8) ausgesendeten Daten mittels einem Empfangsgerät (13) ausgebildet ist, wobei die Daten über eine Antenne (20) drahtlos oder drahtgebunden an das Empfangsgerät (13) gesendet werden.

11. Wohnmobil oder Wohnwagen nach einem der vorhergehenden Ansprüche 1 bis 10, **dadurch gekennzeichnet, dass** die übertragenen Daten mittels einer Übertragungsstrecke (14) vom Empfangsgerät (13) an einen Server (15) übertragen werden, wobei die Übertragungsstrecke (14) als Internet-Verbindung, als Festnetzverbindung und/oder als Mobilfunkverbindung ausgebildet ist und die gesendeten Daten mittels einem Terminal (17) von dem Server (15) ausgelesen werden und beeinflussbar sind.

12. Wohnmobil oder Wohnwagen nach einem der vorhergehenden Ansprüche bis 11, **dadurch gekennzeichnet, dass** die gesendeten Daten als Datensatz (19) auf einer Displayanzeige einer Datenbank (16) angezeigt sind, wobei die Daten zum Beispiel die Fahrzeug-ID, den Besitzer, das Baujahr, die Reparaturkosten die Inspektionen, vermerkte Diebstähle, die besuchten Campingplätze, den aktuellen Fahrzeugwert, Ausstattungswünsche für einen Campingplatz, Buchungszeitraum, den Hersteller oder dergleichen darstellen und eine unverwechselbare Fahrzeughistorie ausbilden.

13. Wohnmobil oder Wohnwagen nach einem der vorhergehenden Ansprüche 1 bis 12, **dadurch gekennzeichnet, dass** die gespeicherten Daten auf dem Transponder (8) zum Beispiel beim Einfahren in einen Campingplatz über ein dort angeordnetes Empfangsgerät (13) ausgelesen und mit der Datenbank (16) über den Server (15) verknüpft werden.
